(19)

**Europäisches Patentamt**
**European Patent Office**
**Office européen des brevets**

(11) **EP 1 903 423 A2**

(12) **EUROPEAN PATENT APPLICATION**

(43) Date of publication:
26.03.2008 Bulletin 2008/13

(51) Int Cl.:
*G06F 3/033* (2006.01)

(21) Application number: 07116551.8

(22) Date of filing: 17.09.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **19.09.2006 KR 20060090889**

(71) Applicant: **Samsung Electronics Co., Ltd.**
**Suwon-si, Gyeonggi-Do (KR)**

(72) Inventors:
• **Choi, Eun-seok**
  **Samsung Advanced Institute of Technology**
  **446-712, Gyeonggi-do (KR)**

• **Yoo, Ho-joon**
  **Samsung Advanced Institute of Technology**
  **446-712, Gyeonggi-do (KR)**
• **Bang, Won-chul**
  **Samsung Advanced Institute of Technology**
  **446-712, Gyeonggi-do (KR)**
• **Hong, Sun-gi**
  **Samsung Advanced Institute of Technology**
  **446-712, Gyeonggi-do (KR)**

(74) Representative: **D'Halleweyn, Nele Veerle Trees Gertrudis**
**Arnold & Siedsma**
**Sweelinckplein 1**
**2517 GK Den Haag (NL)**

(54) **Input device and method and medium for providing movement information of the input device**

(57) Provided is an input device and method for providing movement information of the input device. The input device includes an image processing module to extract a motion vector with respect to an external image, a motion sensing module to sense motion of a housing of the input device and to estimate the posture of the housing, a control module to correct the motion vector using the estimated posture, if motion of the housing is sensed, and a transmission module to transmit the corrected motion vector.

**FIG. 3**

EP 1 903 423 A2

**Description**

CROSS-REFERENCE TO RELATED APPLICATIONS

This application claims priority benefit from Korean Patent Application No. 10-2006-0090889 filed on September 19, 2006 in the Korean Intellectual Property Office, the disclosure of which is incorporated herein by reference in its entirety.

BACKGROUND

1. Field

Embodiments relate to an input device and a method and medium for providing movement information of the input device. More particularly, embodiments relate to an input device capable of controlling an electronic device, such as a TV, a DVD player and the like, using an inertia sensor or an image sensor, operating as a mouse of a personal computer, or controlling functions of a portable terminal apparatus (portable device), such as a mobile phone or a personal digital assistant (PDA) when it is incorporated into the portable terminal apparatus, and a method and medium for providing movement information of the input device by determining whether the input device has moved or not.

2. Description of the Related Art

In order to control a display apparatus such as a TV, a user usually presses control buttons provided on the display apparatus, such as power on/off buttons, volume up/down buttons, and channel up/down buttons, or uses a remote controller having these functions.

With the recent developments made in communication and video technologies, display apparatuses such as TVs provide users with not only video and audio services but also options of interactively selecting a variety of digital contents, like in two-way TVs. In this case, a highlight on a display screen can be moved by a user to select a desired content using a 4-way direction key provided on a remote controller. However, this process is inconvenient to users in that the 4-way direction key needs to be pressed repeatedly, which limits the use of the 4-way direction key.

Several methods have been suggested to address such a problem. In one method, a pointer which moves on a display screen is provided, while in another method, a pointer on a display screen moves corresponding to the motion of an input device by mounting an image sensor in the input device.

A further approach is to mount an image sensor on an input device to detect an object moving around the input device or calculate the distance moved by the object, which is becoming widely adopted. According to the method, the motion vector of a current image is compared with the motion vector of a previous image. For example, a system having a built-in camera can be used as an input device, e.g., a mouse, in a portable terminal apparatus using motion vectors.

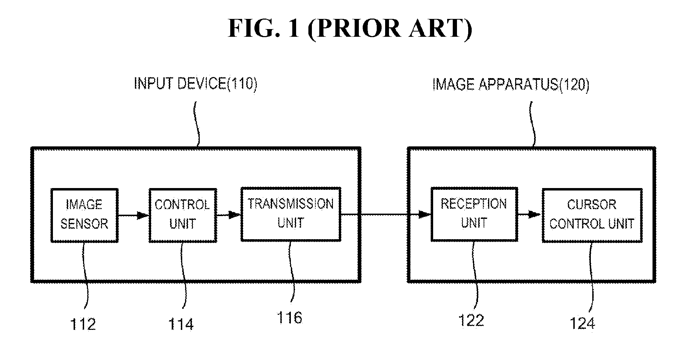

An operation of a conventional input device mounted with an image sensor will now be explained with reference to FIG. 1.

Referring to FIG. 1, a cursor of an image apparatus 120 can be moved corresponding to the motion of an input device 110. First, if an image sensor 112 formed with a lens and a solid-state image sensing device captures an image, the captured image is transferred to a control unit 114, and motion vectors of the image captured front and rear are extracted. Here, the horizontal and vertical motion vector components are individually calculated. A transmission unit 116 transmits information on the motion vectors extracted in the control unit 114, i.e., information on the horizontal component and the vertical component. The method of extracting a motion vector is described in detail in Korean Patent Published Application No. 1997-0019390.

A reception unit 122 of the image apparatus 120 receives the motion vectors transmitted by the transmission unit 116, and a cursor control unit 124 moves the cursor on the screen or moves focus coordinates of a button corresponding to the received motion vectors.

Therefore, when a moving object image is received using an image sensor 112, such as a camera, that is, using a conventional input device110 mounted with the image sensor 112, the image sensor 112 mounted in the input device 110 may erroneously determine that the input device 110 has moved, even though it has not actually moved. In addition, the input device 110 may often deviate from a proper position when a user is in a reclined posture or grips the input device 110 incorrectly. In this case, the posture (position and/or orientation) of the input device 110 having a built-in camera deviates from a reference posture (position and/or orientation), such that a rotated image is input, which results in an error. That is, a pointer displayed on the screen of an image apparatus 120 is not moved in a direction moved by the user.

Accordingly, there is a need for a method which can tolerate the error caused by the image of a moving object and capable of accurately moving a pointer displayed on a display screen irrespective of user's posture (position and/or orientation) and the manner in which a user grips and moves the input device.

SUMMARY

In an aspect of embodiments, there is provided an input device having a built-in image sensor, which can tolerate a movement error of an external object in the input device using an inertia sensor, such as an acceleration sensor or an angular velocity sensor, and a method of providing movement information of the input device.

In an aspect of embodiments, there is provided an input device having a built-in image sensor, which is capable of accurately moving a pointer displayed on a display screen irrespective of user's posture and the manner in which a user grips and moves the input device, and a method of providing movement information of the input device.

According to an aspect of embodiments, there is provided an input device including an image processing module to extract a motion vector with respect to an external image, a motion sensing module to sense motion of a housing of the input device and to estimate a posture of the housing, a control module to correct the motion vector using the estimated posture, if motion of the housing is sensed, and a transmission module to transmit the corrected motion vector.

According to another aspect of embodiments, there is provided an input device including an image processing module to extract a motion vector with respect to an external image, a motion sensing module to sense the motion of a housing of the input device and to estimate the posture of the housing, a control module to correct the motion vector using the estimated posture, if motion of the housing is sensed, and a display unit to move a pointer corresponding to the corrected motion vector.

According to still another aspect of embodiments, there is provided a method for providing movement information of an input device, the method including extracting a motion vector with respect to an external image, sensing motion of the input device and estimating the posture of the input device, correcting the extracted motion vector using the estimated posture, if motion of the input device is sensed, and providing the motion vector.

According to still another aspect of embodiments, there is provided an input device including an image processing module to extract a motion vector with respect to an external image; a motion sensing module to sense motion of a housing of the input device and to estimate a posture of the housing; and a control module to correct the motion vector using the estimated posture and to output the corrected motion vector to a display unit.

According to another aspect, there is provided at least one computer readable medium storing computer readable instructions to implement methods of embodiments.

BRIEF DESCRIPTION OF THE DRAWINGS

These and/or other aspects, features and advantages will become apparent and more readily appreciated from the following description of exemplary embodiments, taken in conjunction with the accompanying drawings of which:

FIG. 1 is a block diagram illustrating operations of a conventional input device with an image sensor mounted therein;
FIG. 2 is a schematic diagram illustrating a system according to an exemplary embodiment;
FIG. 3 is a block diagram illustrating a structure of an input device according to an exemplary embodiment;
FIG. 4 is a block diagram illustrating a motion sensing module according to an exemplary embodiment; and
FIG. 5 is a flowchart illustrating an operation process of a motion sensing module according to an exemplary embodiment.

DETAILED DESCRIPTION OF EMBODIMENTS

Reference will now be made in detail to exemplary embodiments, examples of which are illustrated in the accompanying drawings, wherein like reference numerals refer to the like elements throughout. Exemplary embodiments are described below by referring to the figures.

Exemplary embodiments are described hereinafter with reference to flowchart illustrations of methods. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to implement the functions specified in the flowchart block or blocks.

These computer program instructions may also be stored in a computer usable or computer-readable memory that can direct a computer or other programmable data processing apparatus to function in a particular manner, such that the instructions implement the function specified in the flowchart block or blocks.

The computer program instructions may also be loaded onto a computer or other programmable data processing apparatus to cause a series of operational steps to be performed on the computer or other programmable apparatus to produce a computer implemented process for implementing the functions specified in the flowchart block or blocks.

In addition, each block may represent a module, a segment, or a portion of code, which may comprise one or more executable instructions for implementing the specified logical functions. It should also be noted that in other implementations, the functions noted in the blocks may occur out of the order noted or in different configurations of hardware and software. For example, two blocks shown in succession may, in fact, be executed substantially concurrently, or the blocks may sometimes be executed in the reverse order, depending on the functionality.

The term 'display apparatus' used in embodiments may denote an apparatus to display a pointer corresponding to the motion of an input device.

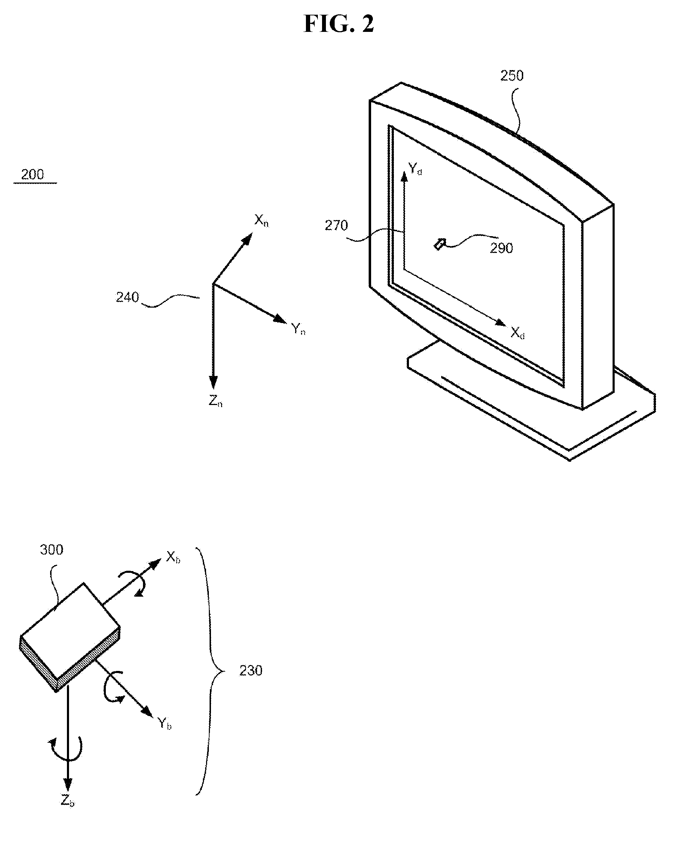

FIG. 2 is a schematic diagram illustrating a system according to an exemplary embodiment.

Referring to FIG. 2, a system 200 according to an exemplary embodiment includes a display apparatus 250 displaying a pointer 290, and an input device 300 remotely controlling the movement of the pointer 290. Also, a device coordinate system 230 to indicate the motion and posture of the input device 300 is shown. FIG. 2 shows that the device coordinate system 230 is formed with 3 axes $(X_b, Y_b, Z_b)$. However, this is an example, and any coordinate system that can indicate the motion and posture of the input device 300 can be applied to embodiments. Here, subscript 'b' indicates the coordinate system in the input device 300.

A coordinate system with respect to the display apparatus 250 corresponding to the device coordinate system 230 can be set, and this will be referred to as a 'display coordinate system' 240. Here, subscript 'n' indicates the coordinate system in the display apparatus 250.

Also, in FIG. 2, a pointer coordinate system 270 is shown in order to indicate pointer coordinate in the display apparatus 250. FIG. 2 shows that the pointer coordinate system 270 is formed with 2 axes $(X_d, Y_d)$. However, this is just provided as an example, and any coordinate system that can indicate pointer coordinates in the display apparatus 250, can be applied to embodiments.

If a user grips the input device 300 and rotates the input device 300 about an arbitrary axis forming the device coordinate system 230, the input device 300 receives an input of a surrounding image through an image input unit, such as a camera or an image sensor mounted in the input device 300, and senses an angular velocity and acceleration with respect to the motion of the input device 300 through a mounted inertia sensor.

Then, if it is determined that there is motion of the input device 300, the input device 300 transmits the movement information on the motion of the input device 300, based on the input image, the sensed angular velocity and acceleration, to the display apparatus 250.

The display apparatus 250 moves the position of the pointer 290 corresponding to the movement information of the input device 300 received from the input device 300.

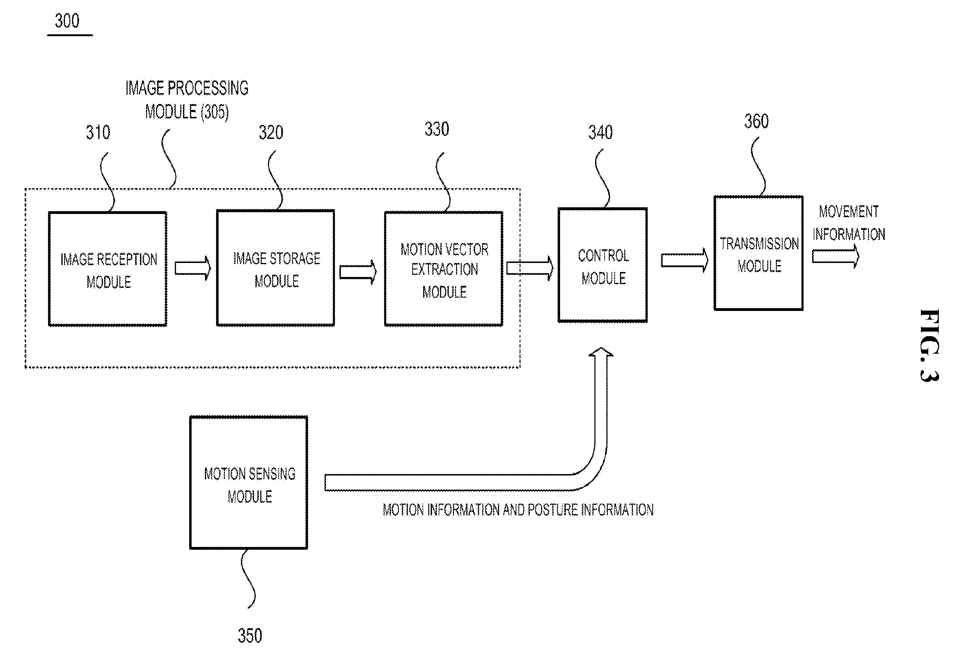

FIG. 3 is a block diagram illustrating a structure of an input device according to an exemplary embodiment.

Referring to FIG. 3, an input device 300 includes an image processing module 305, a control module 340, a motion sensing module 350, and a transmission module 360.

The image processing module 305 includes an image reception module 310, an image storage module 320, and a motion vector extraction module 330. Through these modules, the image processing module 305 receives an image and extracts a motion vector.

The motion sensing module 350 senses motion of the input device 300 corresponding to a housing, and calculates the posture of the input device 300, thereby estimating the posture. The motion sensing module 350 can be implemented with an acceleration sensor or an angular velocity sensor.

The control module 340 corrects the motion vector extracted by the image processing module 305 based on the posture information based on the motion of the input device 300.

The transmission module 360 transmits the corrected motion vector information to a display apparatus as the movement information of the input device 300.

The operation of each module illustrated in FIG. 3 will now be explained in more detail.

First, the image reception module 310 captures an image using a lens and a solid-state image sensing device, and the image storage module 320 stores the captured image in units of frames in a memory.

Then, the motion vector extraction module 330 compares front and rear frames, thereby extracting a motion vector of the image. A method for extracting a motion vector is taught by Korean Patent Application Laid-Open No. 1997-0019390.

The motion sensing module 350 senses the motion of the input device 300 and provides 'motion information' and 'posture information' to the control module 340.

At this time, the 'motion information' is information on whether or not the input device 300 has actually moved, and can be measured using an acceleration sensor or an angular velocity sensor. For example, an acceleration value measured by an acceleration sensor or an angular velocity value measured by an angular velocity sensor can be provided to the control module 340 as the motion information.

In this case, if the motion information is within a preset range, the control module 340 determines that the input device 300 has not moved, and does not transfer the motion vector extracted by the motion vector extraction module 330 to the transmission module 360. That is, since the motion of the input device 300 does not exist, the movement information of the input device 300 does not need to be transferred to the display apparatus through the transmission module 360.

The term 'posture information' is information indicating the posture of an input device such as the input device 300. The term 'posture information' may denote the position and/or orientation information of an input device such as input device 300.

For example, the initial posture of the input device 300 in the gravitational direction is calculated using a 3-axis acceleration sensor, and using the initial posture and the angular velocity information measured from a 3-axis angular velocity sensor a final posture can be calculated. At this time, the posture facing the display apparatus 250 illustrated in FIG. 2, that is, the display coordinate system 240, can be a posture that is a reference. A method of calculating posture information will be explained in detail later.

If it is determined based on the motion information provided from the motion sensing module 350 that the input device 300 has moved, the control module 340 corrects the motion vector provided by the motion vector extraction module 330 based on the posture information provided form the motion sensing module 350.

Through this correction, the pointer displayed on the screen of the display apparatus can be moved in a user's desired direction, even though the posture of the input device 300 deviates from the reference posture. At this time, the posture facing the display apparatus 250 illustrated in FIG. 2, that is, the posture relative to the display coordinate system 240, can be considered as a reference posture.

The control module 340 provides the corrected motion vector information to the transmission module 360, and the transmission module 360 transmits the corrected motion vector as the movement of the input device 300, to the display apparatus. At this time, the movement information may include the motion vector in the horizontal direction and the motion vector in the vertical direction.

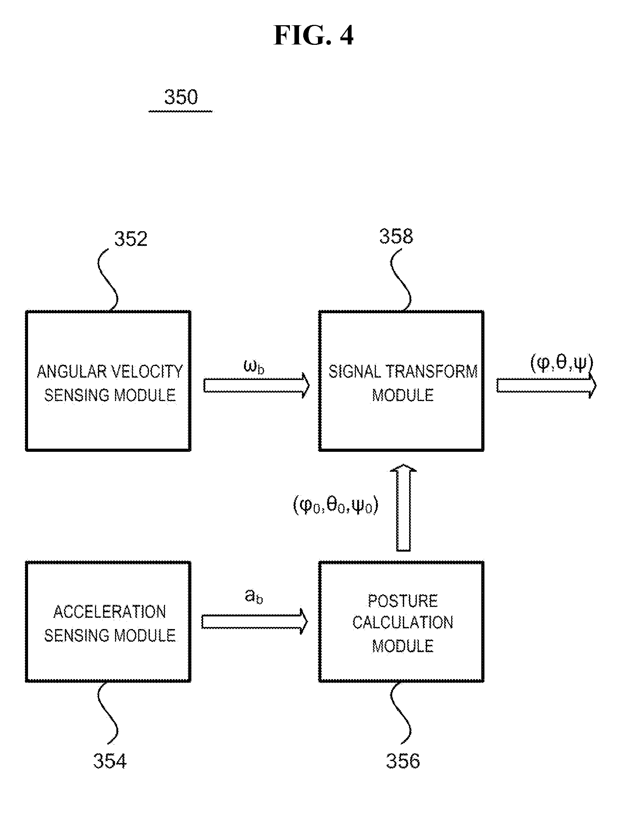

FIG. 4 is a block diagram illustrating a motion sensing module according to an exemplary embodiment.

Referring to FIG. 4, the motion sensing module 350 includes an angular velocity sensing module 352, an acceleration sensing module 354, a posture calculation module 356, and a signal transform module 358.

If there is motion of the input device 300 corresponding to a housing, the angular velocity sensing module 352 senses each rotation information, for example, the rotational angular velocity, about X, Y, and Z axes in the device coordinate system 230 illustrated in FIG. 2. Also, if there is motion of the input device 300, the acceleration sensing module 354 senses the acceleration in each of the X-axis, Y-axis, and Z-axis directions.

The posture calculation module 356 calculates the posture of the input device 300 using the acceleration information in each direction sensed by the acceleration sensing module 354.

As a method of indicating the posture of the input device 300, a roll angle, a pitch angle, and a yaw angle can be used. This will be referred to as 'first posture information'.

The signal transform module 358 transforms the angular velocity information in the device coordinate system 230 sensed by the angular velocity sensing module 352, to second posture information, that is, angular velocity information in the display coordinate system 240, using the first posture information calculated by the posture calculation module 356.

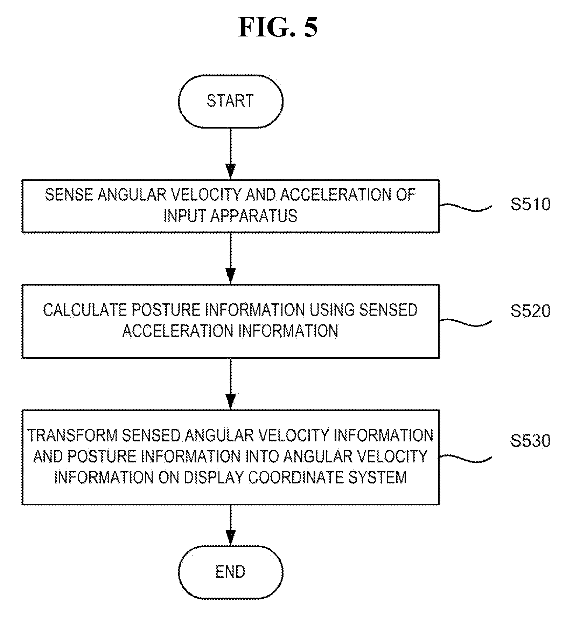

The operation of each module forming the motion sensing module 350 will now be explained with reference to the flowchart illustrated in FIG. 5.

First, the angular velocity and acceleration of the moving input device 300 are sensed by the angular velocity sensing module 352 and the acceleration sensing module 354 in operation S510. For this, the angular velocity sensing module 352 senses the angular velocity at which the input device 300 rotates about each of $X_b$, $Y_b$ and $Z_b$ axes of the device coordinate system 230 illustrated in FIG. 2. For this, the angular velocity module 352 may include a sensor for sensing the rotational angular velocity about each of the axes, and as an example of this sensor, a gyroscope sensor can be used.

At this time, assuming that the angular velocity sensed by the angular velocity sensing module 352 is $W_b$, $W_b$ can be expressed as equation 1 below:

$$wb = [wbx \ wby \ wbz \ ]T \ \ldots\ldots(1)$$

where $w_{bx}$, $w_{by}$, and $w_{bz}$ indicate the rotational angular velocities about X axis, Y axis, and Z axis, respectively.

While the angular velocity of the moving input device 300 about each axis is sensed by the angular velocity sensing module 352, the acceleration sensing module 354 senses the acceleration in each of the X-axis, Y-axis, and Z-axis directions.

At this time, assuming the acceleration sensed by the acceleration sensing module 354 is $a_b$, $a_b$ can be expressed as equation 2 below:

$$ab = [abx \ aby \ abz \ ]T \ \ldots\ldots(2)$$

where $a_{bx}$, $a_{by}$, and $a_{bz}$ indicate the accelerations in the X-axis, Y-axis, and Z-axis directions, respectively. If the acceleration is sensed by the acceleration sensing module 354, the posture calculation module 356 calculates the posture information indicating the initial posture of the input device 300, that is, first posture information, using the sensed acceleration information in operation S520.

At this time, the first posture information can be expressed by the initial roll angle, pitch angle and yaw angle of the input device 300, and will be expressed by '$\varphi_0$', '$\theta_0$' and '$\psi_0$', respectively.

The posture calculation module 356 can obtain the initial posture information of the input device 300 from the sensed acceleration information, using equations 3 through 5 below:

$$\phi_0 = a \tan 2(-a_{by}, -a_{bz}) \ldots\ldots(3)$$

$$\theta_0 = a \tan 2(a_{bx}, \sqrt{a_{by}^2 + a_{bz}^2}) \ldots\ldots(4)$$

where the 'atan2(A,B)' function is a function for obtaining an arctangent value in specified A and B coordinates, and a value $\psi_0$ corresponding to the yaw angle will be explained later.

In this way, if the first posture information of the input device 300 is obtained, the signal transform module 356 can transform the angular velocity $w_b$ in the device coordinate system 230 into the angular velocity $w_n$ in the display coordinate system 240, using the angular velocity information sensed by the angular velocity sensing module 352 and the first posture information, in operation S530.

At this time, the angular velocity $w_n$ can be second posture information ('$\varphi$', '$\theta$' and '$\psi$') through a first order integration with respect to time with the first posture as an initial value:

$$w_n = C_b^n w_b \ \ldots\ldots(5)$$

where $w_n$ is the angular velocity in the display coordinate system 240, and can be expressed as $w_n = [w_{nx} \ w_{ny} \ w_{nz}]^T$, and $w_b$ is indicated in equation 1. Also $C_b^n$ can be expressed as equation 6 below:

$$C_b^n = \begin{bmatrix} \cos\theta\cos\psi & -\cos\phi\sin\psi + \sin\phi\sin\theta\cos\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{bmatrix} \ldots\ldots(6)$$

As can be seen in equations 5 and 6, transform from the device coordinate system 230 to the display coordinate system 240 is possible irrespective of the position at which the user grips the input device 300.

In order to more simplify the operation of equation 6, the value corresponding to the yaw angle $\psi$ in the posture information can be set to 0. In this case, $C_b^n$ can be expressed as equation 7 below:

$$C_b^n = \begin{bmatrix} \cos\theta & \sin\phi\sin\theta & \cos\phi\sin\theta \\ 0 & \cos\phi & -\sin\phi \\ -\sin\theta & \sin\phi\cos\theta & \cos\phi\cos\theta \end{bmatrix} \dots\dots(7)$$

Also, in order to calculate more accurate angular velocity information in the display coordinate system 230, the acceleration sensing module 112 may further include a terrestrial magnetic sensor capable of finding directions by identifying the flow of the magnetic field generated on the earth. In this case, the acceleration sensing module 354 can sense the quantity of change in the direction using the terrestrial magnetic sensor, and provides the resulting value to the posture calculation module 356. From the resulting value, the posture calculation module 356 determines the value $\psi$ corresponding to the yaw angle, and provides this to the signal transform module 358. Then, the signal transform module 358 applies the $\psi$ value with respect to the change in the direction, to equation 6, thereby obtaining the posture information in the display coordinate system 240, that is, the second posture information.

If the second posture information is thus obtained, the control module 118 moves or rotates the motion vector provided by the motion vector extraction module 330 based on the second posture information, thereby correcting the extracted motion vector. Then, the control module 340 transmits the corrected motion vector, as the movement information of the input device 300, to the display apparatus 250 through the transmission module 360. At this time, the corrected motion vector includes the motion information in the vertical direction and horizontal direction.

In the display apparatus 250, the pointer coordinates in the pointer coordinate system 270 are moved corresponding to the corrected motion vector.

Exemplary embodiments discussed above may be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), hardware storage devices (e.g., read only memory media, random access memory media, flash memories, etc.) and storage/transmission media such as carrier waves transmitting signals, which may include computer readable code/instructions, data files, data structures, etc. Examples of storage/transmission media may include wired and/or wireless transmission media. The medium/media may also be a distributed network, so that the computer readable code/instructions are stored/transferred and executed in a distributed fashion. The computer readable code/instructions may be executed by one or more processors. The computer readable code/instructions may also be executed and/or embodied in at least one application specific integrated circuit (ASIC) or Field Programmable Gate Array (FPGA).

In addition, one or more software modules or one or more hardware modules may be configured in order to perform the operations of the above-described exemplary embodiments.

The term "module", as used herein, denotes, but is not limited to, a software component, a hardware component, a plurality of software components, a plurality of hardware components, a combination of a software component and a hardware component, a combination of a plurality of software components and a hardware component, a combination of a software component and a plurality of hardware components, or a combination of a plurality of software components and a plurality of hardware components, which performs certain tasks. A module may advantageously be configured to reside on the addressable storage medium/media and configured to execute on one or more processors. Thus, a module may include, by way of example, components, such as software components, application specific software components, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s). These hardware components may also be one or more processors.

The computer readable code/instructions and computer readable medium/media may be those specially designed and constructed for the purposes of embodiments, or they may be of the kind well-known and available to those skilled in the art of computer hardware and/or computer software.

While exemplary embodiments in which the input device and display apparatus are separated is explained above, embodiments can be applied to a device in which a input device and a display apparatus are formed in one body as in a mobile phone or a PDA, through simple modification. This can be clearly understood to a person skilled in the art.

According to exemplary embodiments as described above, the error in which a camera senses a moving external object and determines that an input device has moved even though the input device has not moved, can be prevented. Also, according to the exemplary embodiments, even when the reference posture of the input device changes, the direction of the pointer can be moved according to the intention of the user.

Although a few exemplary embodiments have been shown and described, it would be appreciated by those skilled in the art that changes may be made in these exemplary embodiments, the scope of which is defined in the claims and their equivalents.

**Claims**

1.   An input device comprising:

> an image processing module to extract a motion vector with respect to an external image;
> a motion sensing module to sense motion of a housing of the input device and to estimate a posture of the housing;
> a control module to correct the motion vector using the estimated posture, if motion of the housing is sensed; and
> a transmission module to transmit the corrected motion vector.

2.   The device of claim 1, wherein the image processing module comprises:

> an image reception module to receive the external image;
> an image storage module to store the received external image; and
> a motion vector extraction module to extract the motion vector from front and rear frames of the stored external image.

3.   The device of claim 1, wherein the motion sensing module comprises:

> an acceleration module to sense an acceleration of the housing;
> a posture calculation module to estimate first posture information with respect to the posture of the housing from the sensed acceleration;
> an angular velocity module to sense angular velocity of the housing; and
> a signal transform module to transform the sensed angular velocity into second posture information with respect to a reference posture of the housing using the first posture information, and to provide the second posture information to the control module.

4.   The device of claim 1, wherein the control module transforms the motion vector in the rotation direction corresponding to the estimated posture, thereby correcting the motion vector.

5.   The device of claim 1, wherein the control module does not provide the extracted motion vector to the transmission module if the motion of the housing is not sensed.

6.   An input device comprising:

> an image processing module to extract a motion vector with respect to an external image;
> a motion sensing module to sense the motion of a housing of the input unit and to estimate the posture of the housing;
> a control module to correct the motion vector using the estimated posture, if motion of the housing is sensed; and
> a display unit to move a pointer corresponding to the corrected motion vector.

7.   The device of claim 6, wherein the image processing module comprises:

> an image reception module to receive the external image;
> an image storage module to store the received external image; and

a motion vector extraction module to extract the motion vector from front and rear frames of the stored external image.

8. The device of claim 6, wherein the motion sensing module comprises:

an acceleration module to sense the acceleration of the housing;
a posture calculation module to estimate first posture information with respect to the posture of the housing from the sensed acceleration;
an angular velocity module to sense the angular velocity of the housing; and
a signal transform module to transform the sensed angular velocity into second posture information with respect to a reference posture of the housing using the first posture information, and to provide the second posture information to the control module.

9. The device of claim 6, wherein the control module transforms the motion vector in the rotation direction corresponding to the estimated posture, thereby correcting the motion vector.

10. The device of claim 6, wherein the control module does not provide the extracted motion vector to the transmission module if the motion of the housing is not sensed.

11. A method for providing movement information of an input device, the method comprising:

extracting a motion vector with respect to an external image;
sensing motion of the input device and estimating the posture of the input device;
correcting the extracted motion vector using the estimated posture, if motion of the input device is sensed; and
providing the motion vector.

12. The method of claim 11, wherein the extracting of the motion vector comprises:

receiving the external image;
storing the received external image; and
extracting the motion vector from front and rear frames of the stored external image.

13. The method of claim 11, wherein the sensing of the motion of the input device and the estimating of the posture of the input device comprises:

sensing acceleration of the input device;
estimating first posture information with respect to the posture of the input device from the sensed acceleration;
sensing angular velocity of the input device; and
estimating second posture information with respect to a reference posture of the input device, using the first posture information and the sensed angular velocity.

14. The method of claim 11, wherein in the correcting of the extracted motion vector, the motion vector is transformed in the rotation direction corresponding to the estimated posture, thereby correcting the motion vector.

15. The method of claim 11, wherein if the motion of the input device is not sensed, the correcting of the extracted motion vector further comprises not correcting the extracted motion vector.

16. The method of claim 11, further comprising moving a pointer corresponding to the corrected motion vector.

17. At least one computer readable medium storing computer readable instructions that control at least one processor to implement the method of claim 11.

18. An input device comprising:

an image processing module to extract a motion vector with respect to an external image;
a motion sensing module to sense motion of a housing of the input device and to estimate a posture of the housing; and
a control module to correct the motion vector using the estimated posture and to output the corrected motion vector to a display unit.

# FIG. 1 (PRIOR ART)

INPUT DEVICE(110)          IMAGE APPARATUS(120)

| IMAGE SENSOR | CONTROL UNIT | TRANSMISSION UNIT |

| RECEPTION UNIT | CURSOR CONTROL UNIT |

112          114          116          122          124

# FIG. 2

FIG. 3

EP 1 903 423 A2

13

# FIG. 4

350

352

358

ANGULAR VELOCITY SENSING MODULE

$\omega_b$

SIGNAL TRANSFORM MODULE

$(\varphi, \theta, \psi)$

$(\varphi_0, \theta_0, \psi_0)$

ACCELERATION SENSING MODULE

$a_b$

POSTURE CALCULATION MODULE

354

356

# FIG. 5

START

↓

SENSE ANGULAR VELOCITY AND ACCELERATION OF INPUT APPARATUS — S510

↓

CALCULATE POSTURE INFORMATION USING SENSED ACCELERATION INFORMATION — S520

↓

TRANSFORM SENSED ANGULAR VELOCITY INFORMATION AND POSTURE INFORMATION INTO ANGULAR VELOCITY INFORMATION ON DISPLAY COORDINATE SYSTEM — S530

↓

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060090889

- KR 19970019390